# EUROPEAN PATENT APPLICATION

(11) **EP 4 702 890 A1**
(43) Date of publication of application: **04.03.2026**
(21) Application number: 25179644.7
(22) Date of filing: 29.05.2025
(51) Int. Cl.: A47J 27/00, A47J 27/21, A47J 31/18, A47J 31/54

(54) **AN ELECTRIC POT**

(30) Priority: 02.09.2024 TR 2024115410
(71) Applicant: Arçelik Anonim Sirketi, 34445 Istanbul (TR)
(72) Inventor: BEDIR, ERSIN, 34445 ISTANBUL (TR); KARAPINAR, UGUR, 34445 ISTANBUL (TR); TURKOGLU, MIHRIBAN, 34445 ISTANBUL (TR)

(57) **Abstract**

The present invention relates to an electric pot (100) comprising a pot body (200) having a lower opening (210), an upper opening (220) and side walls (230); a heating plate (400); and at least one connector (700) for providing electrical connection to the heating plate (400).

## Description

The present invention relates to an easy-to-clean electric pot with improved safety and decreased production costs.

A pot (cezve in Turkish) is a kitchen appliance which is used on a cooktop for cooking and/or heating foodstuffs, particularly Turkish coffee and milk. An electric pot is the electrically powered version of the pot used on a cooktop. The electric pots ensure a faster and more effectively controlled cooking/heating process compared to the cooktop pots. In particular, the electric pot allows a better controlled coffee brewing process, thus providing the user with a more practical coffee brewing experience. The electric pots generally comprise a pot body and a heating plate which is mounted to the lower side of the said pot body. The cooking/heating process is performed by placing foodstuffs into a receptacle formed between the pot body and the heating plate. In the state of the art electric pots, in order to fix the heating plate to the lower side of the pot body, ribs are formed on the inner surface of the pot body for supporting the front heating surface of the heating plate. The position of the heating plate is fixed at the point where the same bears against the ribs. The ribs positioned as protrusions or supports on the inner surface of the pot body form fine recesses on the surfaces where the ribs join with the pot body. The use of ribs causes the residues of the foodstuffs cooked/heated to accumulate in the said fine recesses. It is difficult to clean foodstuff residues from the fine recesses. Failure to clean the foodstuff residues may lead to bacterial buildup, which in turn causes hygiene problems in the electric pot. Moreover, especially after brewing coffee, the staining effect of coffee is more prominent in the fine recesses and adversely affects the appearance of the cooking/heating receptacle.

In the state of the art Turkish Utility Model Document No. 2011/02969 a pot is disclosed, for preparing beverages with sudden overflowing characteristics such as Turkish coffee, etc. Here, the pot comprises a structure which is specifically designed for fixing the heating components composed of a lower plate configured to hold the pot in a stable manner and provide power. Accordingly, the heating means in the electric pot, that is the electrical resistance, is clamped by means of a ring placed in a groove formed on the pot body. The said electrical resistance circumferentially covered with a silicone gasket is fixed, by means of a compression flange disposed at the lower side thereof, between the said ring and the flange. The said compression flange is configured to have claws seated into housings on the body to block movement. The specific design of the said compression flange enables the body lower lid to be mounted without using screws.

The aim of the present invention is the realization of an electric pot having a smooth cooking/heating receptacle without forming a rib which may cause bacterial buildup.

Another aim of the present invention is the realization of an electric pot which ensures that the pot body, the heating plate, the sealing gasket, the connection body and/or the lower lid can be mounted in a single orientation.

Yet another aim of the present invention is the realization of an electric pot wherein the sealing gasket is fixed to the connection body without requiring an additional apparatus.

Another aim of the present invention is the realization of an electric pot wherein the lower lid can be fixed by means of a single fixing unit.

The electric pot of the present invention comprises a pot body having a lower opening, an upper opening and side walls. The electric pot of the present invention further comprises at least one narrowing section of the pot body which narrows in terms of inner wall width from the lower opening to the upper opening; a heating plate which forms a cooking/heating receptacle together with a front surface thereof and the inner side walls of the pot body, which has a sealing gasket along the wall thereof and which has a wall width so as to pass through the lower opening and to become seated by being compressed together with the sealing gasket along the narrowing section; at least one connection body which is fixed to the heating plate so as to face a rear surface of the heating plate; at least one locking protrusion which is disposed on the inner side walls of the pot body; at least one locking claw which is disposed on the connection body and which engages with the locking protrusion so as to prevent the movement of the heating plate toward the lower opening; and at least one connector which provides electrical connection to the heating plate.

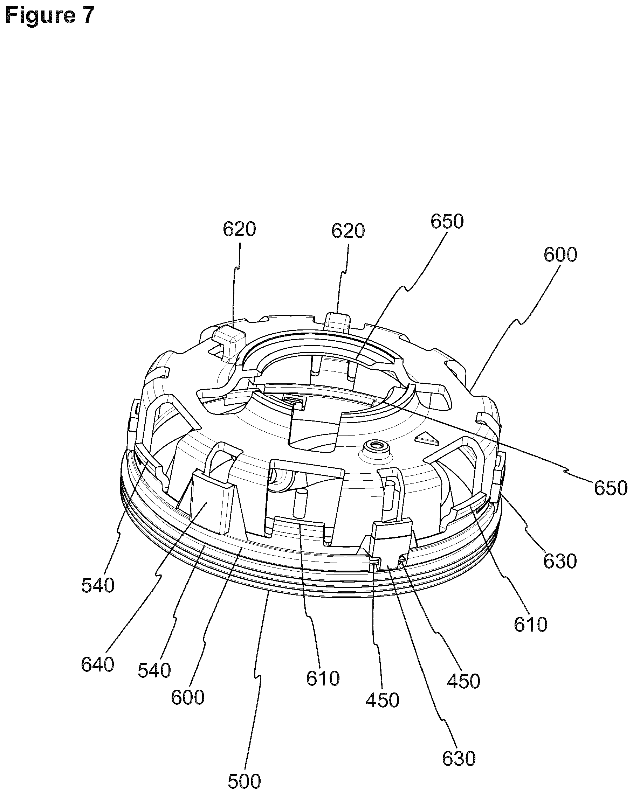

In the electric pot of the present invention, the sealing gasket is positioned along the wall of the heating plate, and the connection body is fixed to the heating plate so as to face the rear surface of the heating plate (the surface facing the lower opening). Thus, a heating plate - sealing gasket - connection body assembly is formed (see Figures 7-9). During the assembly of the electric pot of the present invention, the said assembly is inserted through the lower opening of the pot body with the front surface (the heating/cooking surface) thereof facing the upper opening. As the assembly is advanced along the narrowing section, the wall of the heating plate bears against the inner surface of the pot body together with the sealing gasket. The heating plate seated by bearing against the inner surface of the pot body is fixedly positioned in the pot body. Thus, the heating plate cannot advance further toward the upper opening in the pot body. By means of the locking protrusion and the locking claw, the heating plate is prevented from moving toward the lower opening in the pot body. The locking protrusion is disposed on the inner side walls of the pot body. The locking claw is disposed on the connection body. Here, when the heating plate reaches the position to bear against the inner surface of the pot body to be seated, the locking claw engages with the locking protrusion. Thus, the heating plate is prevented from advancing toward the lower opening in the pot body. By preventing the movement of the heating plate toward both the upper and lower openings in the pot body, the heating plate is kept in a fixed position in the pot body. The locking protrusion is disposed on the inner side walls of the pot body so as to be positioned between the rear surface of the heating plate and the lower opening of the pot body, in a region outside the cooking/heating receptacle. Since no part of the locking protrusion is located in the cooking/heating receptacle, the locking protrusion does not come into contact with foodstuffs. Thus, the locking protrusion does not form any recess in the cooking/heating receptacle which may lead to bacterial buildup.

In the embodiments of the present invention, the pot body may be conical, cylindrical, or rectangular. The narrowing section may be formed along a portion of the pot body (see Figure 1), or may be formed along the entire pot body. In a preferred embodiment of the present invention, the pot body is conical (see Figures 2 and 4). In a preferred embodiment of the present invention, the narrowing section is formed along the entire pot body (as the natural shape of a cylindrical structure: the base of the conical shape is the lower opening, and the top of the conical shape is the upper opening). In a preferred embodiment of the present invention, the heating plate is in the form of a disk, and the sealing gasket is circular.

In an embodiment of the present invention, the electric pot comprises a lower lid having a connector opening which provides access to the connector and which covers the lower opening. The lower lid ensures the covering of the lower opening. By means of the lower lid, safer use of the electric pot is provided. Additionally, by isolating the heating plate - connector connection and the connection body from the external environment, the said components are prevented from being exposed to physical damage. Moreover, the lower lid may acts as a guide for a dock to which the connector is connected. Thus, the connector-dock connection can be more easily realized.

In an embodiment of the present invention, the electric pot comprises at least one lid holding arm which is disposed on the surface of the connection body facing the lower lid; and at least one support arm which is disposed on the surface of the lower lid facing the connection body and which, when the lower lid is positioned in the lower opening and the lower lid is rotated around its own axis to be brought to a selected position, engages with the lid holding arm to temporarily fix the lower lid to the connection body. By means of this embodiment, the ease of assembly of the lower lid is increased. Moreover, the lower lid can be mounted only in the selected position and orientation. Mounting the lower lid in a position other than the selected one may cause an increase in load stress on the components. The lower lid being mounted only in the selected position and orientation increases the reliability and durability of the electric pot. During the assembly of the lower lid, the lower lid is placed into the lower opening of the pot body. The pot body is rotated in a selected direction (clockwise or counterclockwise). When the lower lid is brought to the selected position and orientation (for example, the selected radial position in embodiments with conical or cylindrical pot bodies), the lid holding arm engages with the support arm, preventing the lower lid from being rotated further. As a result of the engagement between the lid holding arm and the support arm, the connection body and the lower lid are temporarily fixed to each other. In this position, the lower lid cannot move radially or linearly in any direction other than being rotated in the opposite direction of the selected direction.

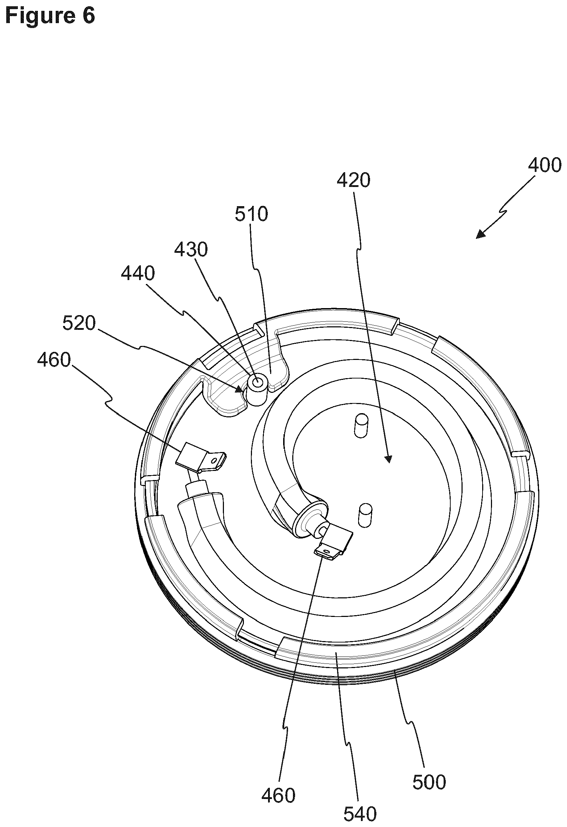

In an embodiment of the present invention, the electric pot comprises at least one fixing unit for fixing the lower lid to the pot body; a fixing housing which is provided on the rear surface of the heating plate (see Figure 6) or on the surface of the connection body facing the lower lid for receiving the fixing unit; and at least one fixing unit opening which is arranged on the lower lid for the passage of the fixing unit. When this embodiment is used together with the lid holding arm and the support arm, a single fixing unit is sufficient to permanently fix the lower lid to the pot body. Thus, the number of fixing units used is reduced, leading to a decrease in the production cost of the electric pot.

In an embodiment of the present invention, the electric pot comprises a gasket guide protrusion which is disposed on the rear surface of the heating plate; and a gasket guide mate which is a part of the sealing gasket and which engages with the gasket guide protrusion so as to enable the sealing gasket to be positioned on the heating plate in a single selected orientation. The primary function of the sealing gasket is to fix the heating plate to the pot body. The secondary function of the sealing gasket is to ensure liquid isolation of the cooking/heating receptacle, in other words, to provide leakproofing between the pot body and the heating plate. Positioning the sealing gasket on the heating plate in a single orientation is important to extend the economic life of the sealing gasket and to ensure the correct performance of the function thereof. When the sealing gasket is positioned on the heating plate in the selected orientation, the load acting on the sealing gasket (the load acting on the sealing gasket as a result of the compression thereof between the inner surface of the pot body and the heating plate) is distributed homogeneously. In alternative orientations, the said load distribution may lose its homogeneity. As a result, the sealing gasket may tear from sections exposed to excessive load. In sections exposed to lower load, liquid leakage may occur.

In an embodiment of the present invention, the electric pot comprises the gasket guide mate which is the fixing housing. In this embodiment, the fixing housing simultaneously acts as a gasket guide mate. Thus, by avoiding the use of additional material for the gasket guide mate, savings in materials are achieved (see Figure 6).

In an embodiment of the present invention, the electric pot comprises the gasket guide mate which is configured as a part of the sealing gasket which extends toward the rear surface of the heating plate and a guide opening which surrounds at least a part of the gasket guide protrusion (see Figure 6). By means of the guide opening which surrounds at least a part of the gasket guide protrusion, the sealing gasket can be easily positioned on the heating plate only in a selected orientation.

In an embodiment of the present invention, the electric pot comprises channels which form recesses and protrusions along the surface of the sealing gasket extending along the wall of the heating plate. When the heating plate is placed into the pot body, the air trapped between the channels exerts force to the channel walls and reinforces the grip of the sealing gasket on the inner surface of the pot body. By means of this embodiment, the fixing of the sealing gasket to the heating plate in the pot body is strengthened. Moreover, the liquid isolation of the cooking/heating receptacle, in other words the leakproofing between the pot body and the heating plate, is enhanced.

In an embodiment of the present invention, the electric pot comprises a connection protrusion which is formed in an L-shape in the wall cross-section of the heating plate; a gasket extension which extends along at least a portion of the connection protrusion of the sealing gasket; and a connection claw which is positioned on the connection body and which is fitted onto the connection protrusion to fix the connection body to the heating plate and to fix and compress the gasket extension between the connection protrusion and the connection body. By means of this embodiment, while the connection body is fixed to the heating plate thanks to the connection protrusion and the connection claw, the gasket extension is compressed and fixed between the top surface of the connection protrusion and the connection body. Thus, a heating plate-sealing gasket-connection body assembly is formed with a single connection structure (by means of the connection protrusion and the connection claw). By means of the connection protrusion and the connection claw, the connection body s enabled to be placed on the heating plate in a single orientation.

In the embodiments where the connector is fixed to the connection body, the orientation/position wherein the connection body is fixed to the heating plate directly affects the physical tensions in the electrical connection between the connector and the heating plate. For example, if the electrical connection between the connector and the heating plate is established via cables or connection terminals and the connection body is not mounted in the selected orientation on the heating plate, the cables may be stretched and torn, or the connection terminals may detach. As a result, the electrical connection between the connector and the heating plate is lost, and the electric pot malfunctions. Enabling the connection body to be mounted on the heating plate in a single selected orientation extends the economic life of the electric pot.

In an embodiment of the present invention, the electric pot comprises a connector dock which is arranged in the connection body for fixing the connector. By means of the connector dock, the connector is enabled to be fixed to the connection body in a single selected orientation.

In an embodiment of the present invention, the electric pot comprises at least one alignment guide which is disposed on the inner side walls of the pot body; and an alignment guide mate which is disposed on the connection body and which engages with the alignment guide so as to enable the connection body and the heating plate to be guided along the alignment guide and hence, to be positioned in a single selected orientation in the pot body. By means of this embodiment, the heating plate-sealing gasket-connection body assembly is enabled to be mounted only in a single selected orientation/position and prevented from being mounted in other orientations. Thus, when a dock is used for the connector, the position (for example radial position) of the electric pot relative to the dock can always be arranged in the same manner.

In an embodiment of the present invention, the electric pot comprises at least two connection terminals which provide the electrical connection between the heating plate and the connector. By means of this embodiment, the electrical connection between the connector and the heating plate during assembly is facilitated.

In an embodiment of the present invention, the electric pot comprises a pot handle which is disposed on the outer side wall of the pot body and which enables the pot to be held by hand. Thus, it is made it easier for the user to grip and control the electric pot. In an embodiment of the present invention, the electric pot comprises at least one spout which is arranged on the edge of the side walls where the upper opening is located and which enables a fluid in the cooking/heating receptacle to be poured out of the cooking/heat receptacle in a controlled manner.

The electric pot realized in order to attain the aim of the present invention is illustrated in the attached figures, where:

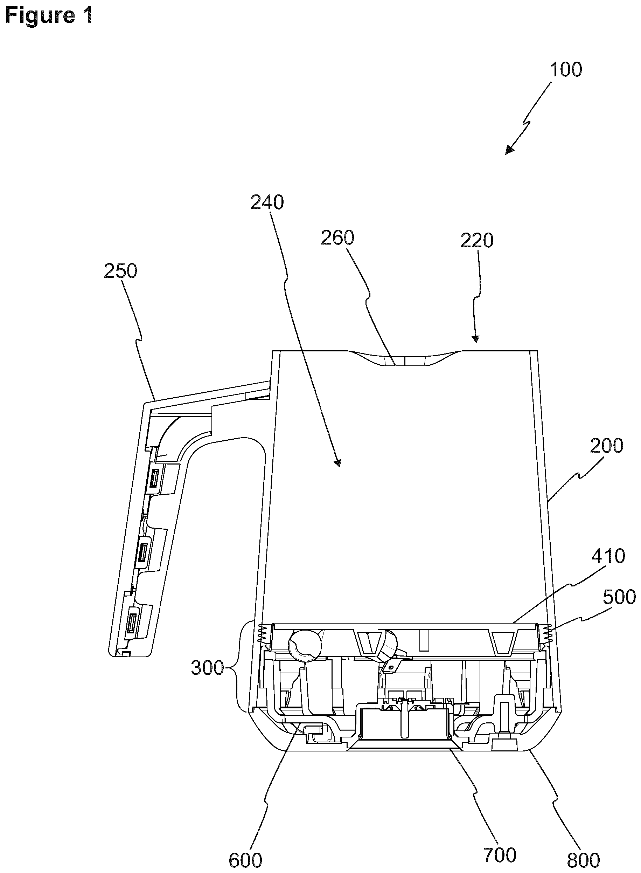

Figure 1 - is the sideways cross-sectional view of an electric pot of the present invention.

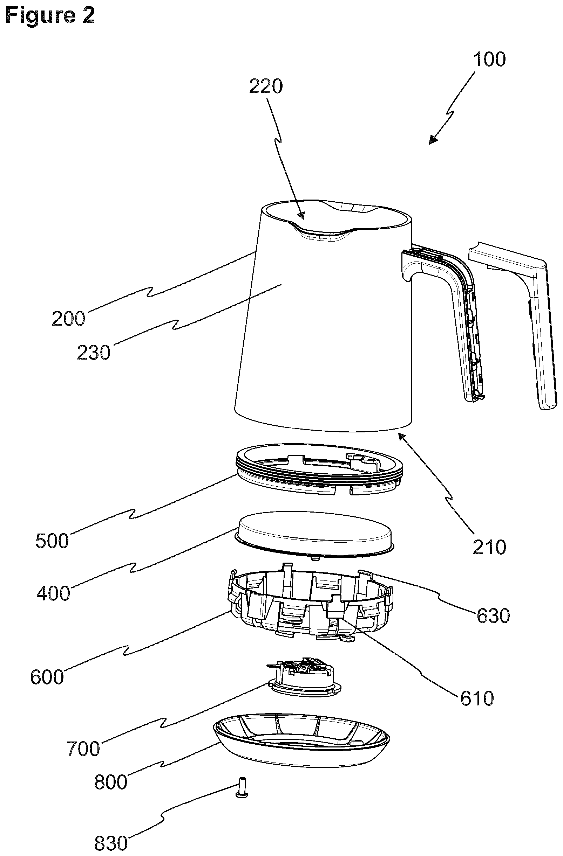

Figure 2 - is the exploded view of an electric pot of the present invention.

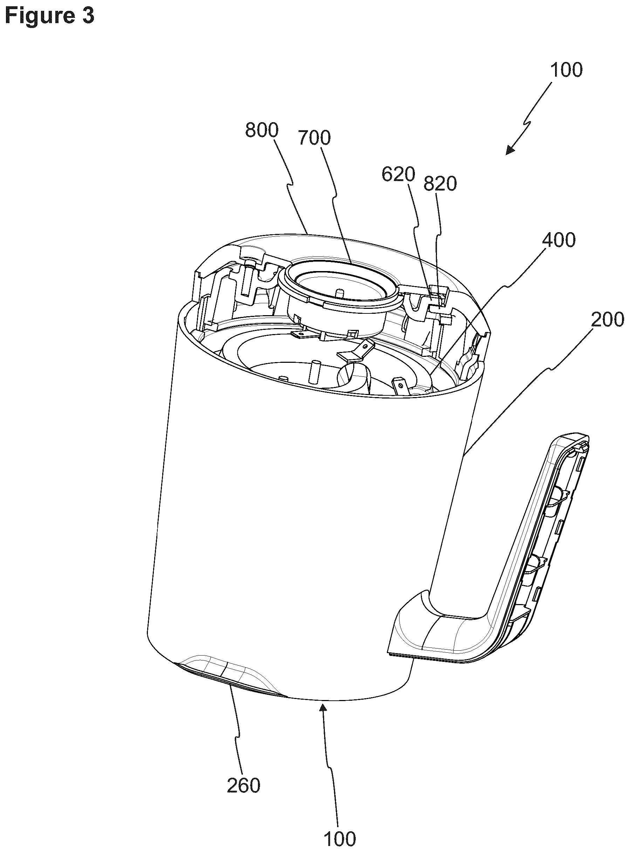

Figure 3 - is the bottom isometric cross-sectional view of an electric pot of the present invention.

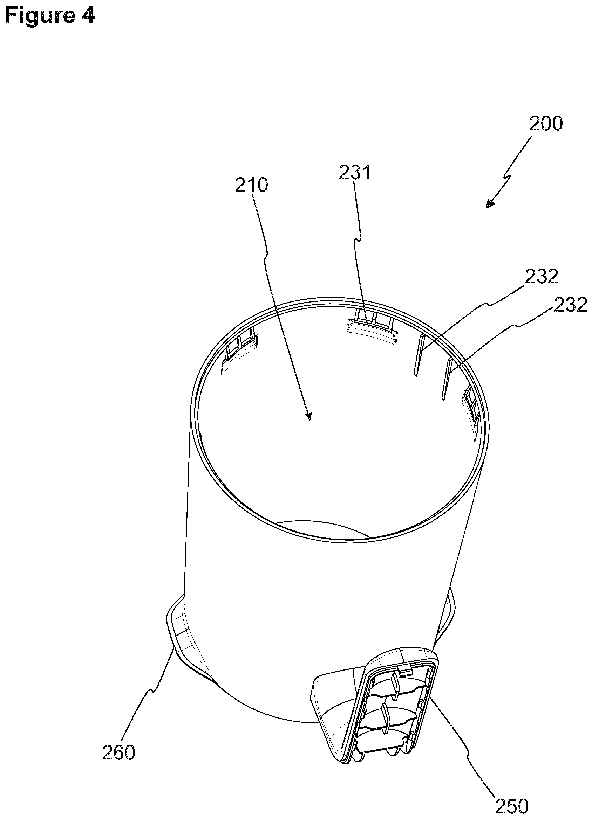

Figure 4 - is the isometric view of the pot body.

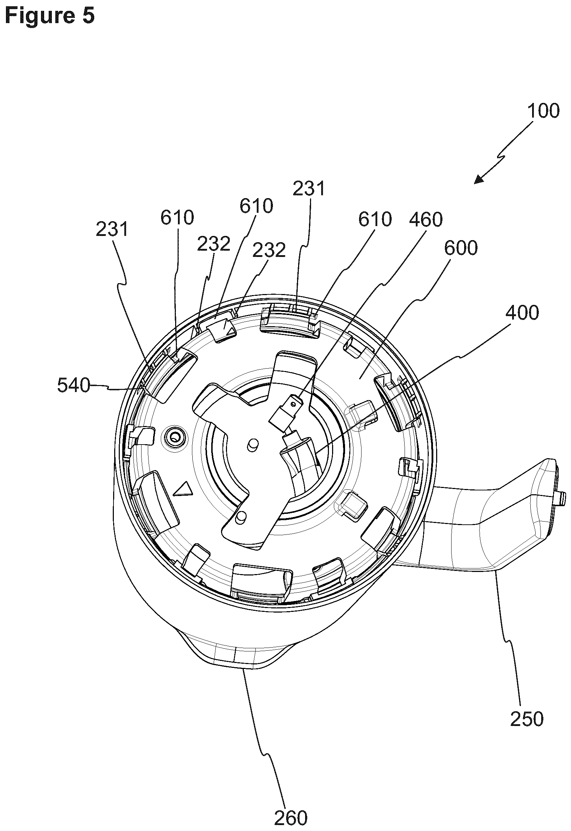

Figure 5 - is the bottom view of an electric pot of the present invention before the lower lid is mounted.
Figure 6 - is the view of the heating plate from the rear surface.
Figure 7 - is the isometric view of the heating plate - sealing gasket - connection body assembly.

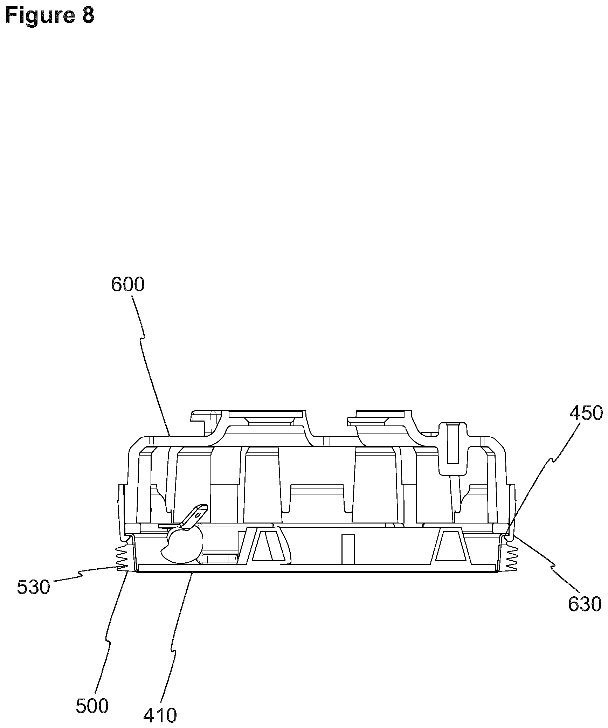

Figure 8 - is the sideways view of the heating plate - sealing gasket - connection body assembly.

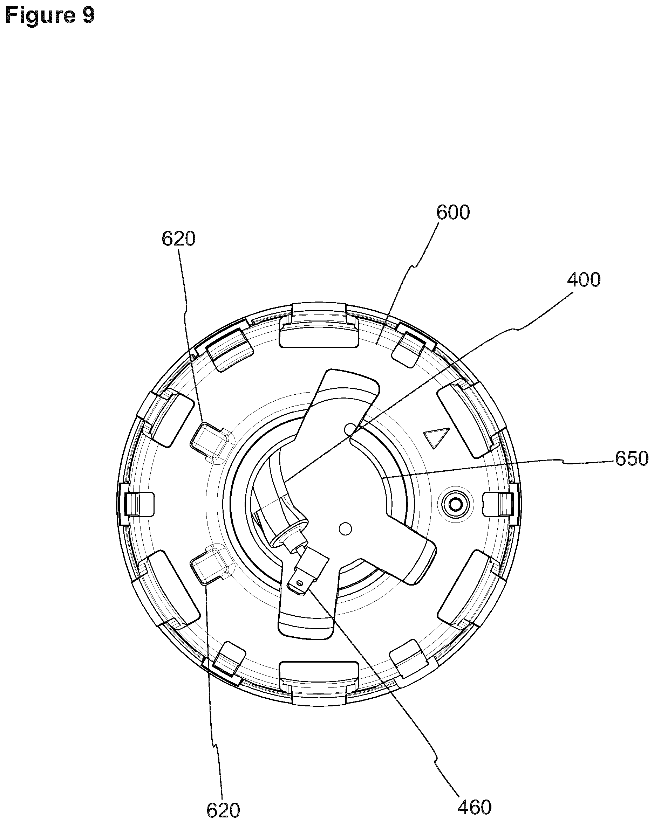

Figure 9 - is the bottom view of the heating plate - sealing gasket - connection body assembly.

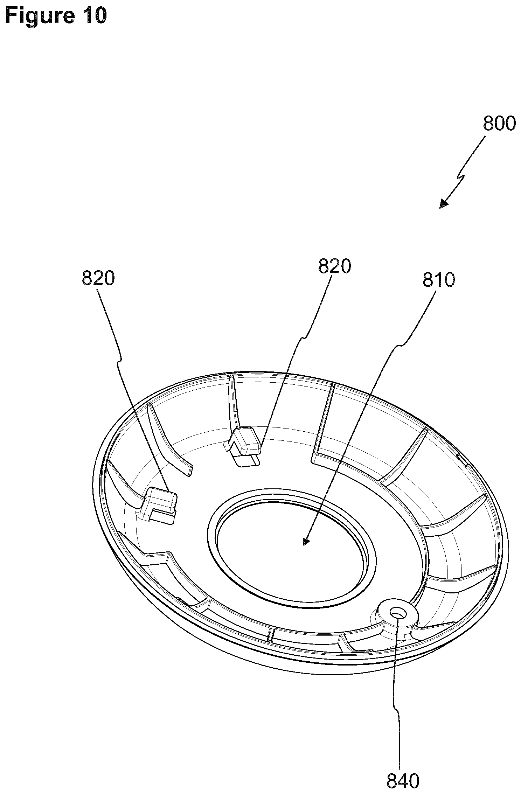

Figure 10 is the isometric view of the lower lid.

The elements illustrated in the figures are numbered as follows:
100. Electric pot
200. Pot body
   210. Lower opening
   220. Upper opening
   230. Side walls
      231. Locking protrusion
      232. Alignment guide
   240. Receptacle
   250. Pot handle
   260. Spout
300. Narrowing section
400. Heating plate
   410. Front surface
   420. Rear surface
   430. Fixing housing
   440. Gasket guide protrusion
   450. Connection protrusion
   460. Connection terminal
500. Sealing gasket
   510. Gasket guide mate
   520. Guide opening
   530. Channel
   540. Gasket extension
600. Connection body
   610. Locking claw
   620. Lid holding arm
   630. Connection claw
   640. Alignment guide mate
   650. Connector dock
700. Connector
800. Lower lid
   810. Connector opening
   820. Support arm
   830. Fixing unit
   840. Fixing unit opening

The electric pot (100) of the present invention comprises a pot body (200) having a lower opening (210), an upper opening (220) and side walls (230). The electric pot (100) of the present invention further comprises at least one narrowing section (300) of the pot body (200) which narrows in terms of inner wall width from the lower opening (210) to the upper opening (220); a heating plate (400) which forms a cooking/heating receptacle together with a front surface (410) thereof and the inner side walls (230) of the pot body (200), which has a sealing gasket (500) along the wall thereof and which has a wall width so as to pass through the lower opening (210) and to become seated by being compressed together with the sealing gasket (500) along the narrowing section (300); at least one connection body (600) which is fixed to the heating plate (400) so as to face a rear surface (420) of the heating plate (400); at least one locking protrusion (231) which is disposed on the inner side walls (230) of the pot body (200); at least one locking claw (610) which is disposed on the connection body (600) and which engages with the locking protrusion (231) so as to prevent the movement of the heating plate (400) toward the lower opening (210); and at least one connector (700) which provides electrical connection to the heating plate (400). In the preferred embodiment of the present invention, a cross-section of the connection body (600) is circular, and the locking claw (610) is positioned along the circumference of the circle.

In a preferred embodiment of the present invention, the pot body (200) and/or the heating plate (400) may be manufactured from a metal (in particular stainless steel) or ceramic. In a preferred embodiment of the present invention, the sealing gasket (500) may be manufactured from rubber or silicone.

In an embodiment of the present invention, the electric pot (100) comprises a lower lid (800) having a connector opening (810) which provides access to the connector (700) and which covers the lower opening (210)

In an embodiment of the present invention, the electric pot (100) comprises at least one lid holding arm (620) which is disposed on the surface of the connection body (600) facing the lower lid (800); and at least one support arm (820) which is disposed on the surface of the lower lid (800) facing the connection body (600) and which, when the lower lid (800) is positioned in the lower opening (210) and the lower lid (800) is rotated around its own axis to be brought to a selected position, engages with the lid holding arm (620) to temporarily fix the lower lid (800) to the connection body (600).

In an embodiment of the present invention, the electric pot (100) comprises at least one fixing unit (830) for fixing the lower lid (800) to the pot body (200); a fixing housing (430) which is provided on the rear surface (420) of the heating plate (400) or on the surface of the connection body (600) facing the lower lid (800) for receiving the fixing unit (830); and at least one fixing unit opening (840) which is arranged on the lower lid (800) for the passage of the fixing unit (830). The fixing unit (830) may be a screw or a bolt. The fixing housing (430) may be a screw boss or a nut.

In an embodiment of the present invention, the electric pot (100) comprises a gasket guide protrusion (440) which is disposed on the rear surface (420) of the heating plate (400); and a gasket guide mate (510) which is a part of the sealing gasket (500) and which engages with the gasket guide protrusion (440) so as to enable the sealing gasket (500) to be positioned on the heating plate (400) in a single selected orientation.

In an embodiment of the present invention, the electric pot (100) comprises the gasket guide mate (510) which is the fixing housing (430).

In an embodiment of the present invention, the electric pot (100) comprises the gasket guide mate (510) which is configured as a part of the sealing gasket (500) which extends toward the rear surface (420) of the heating plate (400) and a guide opening (520) which surrounds at least a part of the gasket guide protrusion (440).

In an embodiment of the present invention, the electric pot (100) comprises channels (530) which form recesses and protrusions along the surface of the sealing gasket (500) extending along the wall of the heating plate (400).

In an embodiment of the present invention, the electric pot (100) comprises a connection protrusion (450) which is formed in an L-shape in the wall cross-section of the heating plate (400); a gasket extension (540) which extends along at least a portion of the connection protrusion (450) of the sealing gasket (500); and a connection claw (630) which is positioned on the connection body (600) and which is fitted onto the connection protrusion (450) to fix the connection body (600) to the heating plate (400) and to fix and compress the gasket extension (540) between the connection protrusion (450) and the connection body (600).

In an embodiment of the present invention, the electric pot (100) comprises a connector dock (650) which is arranged in the connection body (600) for fixing the connector (700).

In an embodiment of the present invention, the electric pot (100) comprises at least one alignment guide (232) which is disposed on the inner side walls (230) of the pot body (200); and an alignment guide mate (640) which is disposed on the connection body (600) and which engages with the alignment guide (232) so as to enable the connection body (600) and the heating plate (400) to be guided along the alignment guide (232) and hence, to be positioned in a single selected orientation in the pot body (200).

In an embodiment of the present invention, the electric pot (100) comprises at least two connection terminals (460) which provide the electrical connection between the heating plate (400) and the connector (700).

In an embodiment of the present invention, the electric pot (100) comprises a pot handle (250) which is disposed on the outer side wall (230) of the pot body (200) and which enables the pot (100) to be held by hand. In an embodiment of the present invention, the electric pot (100) comprises at least one spout (260) which is arranged on the edge of the side walls (230) where the upper opening (220) is located and which enables a fluid in the cooking/heating receptacle to be poured out of the cooking/heat receptacle in a controlled manner.

## Claims

1. An electric pot (100) **comprising** a pot body (200) having a lower opening (210), an upper opening (220) and side walls (230), **characterized by** at least one narrowing section (300) of the pot body (200) which narrows in terms of inner wall width from the lower opening (210) to the upper opening (220); a heating plate (400) which forms a cooking/heating receptacle together with a front surface (410) thereof and the inner side walls (230) of the pot body (200), which has a sealing gasket (500) along the wall thereof and which has a wall width so as to pass through the lower opening (210) and to become seated by being compressed together with the sealing gasket (500) along the narrowing section (300); at least one connection body (600) which is fixed to the heating plate (400) so as to face a rear surface (420) of the heating plate (400); at least one locking protrusion (231) which is disposed on the inner side walls (230) of the pot body (200); at least one locking claw (610) which is disposed on the connection body (600) and which engages with the locking protrusion (231) so as to prevent the movement of the heating plate (400) toward the lower opening (210); and at least one connector (700) which provides electrical connection to the heating plate (400).

2. An electric pot (100) as in Claim 1, **characterized by** a lower lid (800) having a connector opening (810) which provides access to the connector (700) and which covers the lower opening (210)

3. An electric pot (100) as in Claim 2, **characterized by** at least one lid holding arm (620) which is disposed on the surface of the connection body (600) facing the lower lid (800); and at least one support arm (820) which is disposed on the surface of the lower lid (800) facing the connection body (600) and which, when the lower lid (800) is positioned in the lower opening (210) and the lower lid (800) is rotated around its own axis to be brought to a selected position, engages with the lid holding arm (620) to temporarily fix the lower lid (800) to the connection body (600).

4. An electric pot (100) as in Claim 2 or 3, **characterized by** at least one fixing unit (830) for fixing the lower lid (800) to the pot body (200); a fixing housing (430) which is provided on the rear surface (420) of the heating plate (400) or on the surface of the connection body (600) facing the lower lid (800) for receiving the fixing unit (830); and at least one fixing unit opening (840) which is arranged on the lower lid (800) for the passage of the fixing unit (830).

5. An electric pot (100) as in any one of the above claims, **characterized by** a gasket guide protrusion (440) which is disposed on the rear surface (420) of the heating plate (400); and a gasket guide mate (510) which is a part of the sealing gasket (500) and which engages with the gasket guide protrusion (440) so as to enable the sealing gasket (500) to be positioned on the heating plate (400) in a single selected orientation.

6. An electric pot (100) as in Claim 5, **characterized by** the gasket guide mate (510) which is the fixing housing (430).

7. An electric pot (100) as in Claim 5 or 6, **characterized in that** the gasket guide mate (510) is configured as a part of the sealing gasket (500) which extends toward the rear surface (420) of the heating plate (400) and a guide opening (520) is provided thereon, which surrounds at least a part of the gasket guide protrusion (440).

8. An electric pot (100) as in any one of the above claims, **characterized by** at least one channel (530) which forms recesses and protrusions along the surface of the sealing gasket (500) extending along the wall of the heating plate (400).

9. An electric pot (100) as in any one of the above claims, **characterized by** a connection protrusion (450) which is formed in an L-shape in the wall cross-section of the heating plate (400); a gasket extension (540) which extends along at least a portion of the connection protrusion (450) of the sealing gasket (500); and a connection claw (630) which is positioned on the connection body (600) and which is fitted onto the connection protrusion (450) to fix the connection body (600) to the heating plate (400) and to fix and compress the gasket extension (540) between the connection protrusion (450) and the connection body (600).

10. An electric pot (100) as in any one of the above claims, **characterized by** a connector dock (650) which is arranged in the connection body (600) for fixing the connector (700).

11. An electric pot (100) as in any one of the above claims, **characterized by** at least one alignment guide (232) which is disposed on the inner side walls (230) of the pot body (200); and an alignment guide mate (640) which is disposed on the connection body (600) and which engages with the alignment guide (232) so as to enable the connection body (600) and the heating plate (400) to be guided along the alignment guide (232) and hence, to be positioned in a single selected orientation in the pot body (200).

12. An electric pot (100) as in any one of the above claims, **characterized by** at least two connection terminals (460) which provide the electrical connection between the heating plate (400) and the connector (700).
